# EUROPEAN PATENT APPLICATION

(11) **EP 4 552 827 A1**
(43) Date of publication of application: **14.05.2025**
(21) Application number: 24212529.2
(22) Date of filing: 12.11.2024
(51) Int. Cl.: B29C 64/106, B29C 64/118, B29C 64/259, B33Y 10/00, B33Y 30/00, B33Y 70/10, B33Y 80/00, B29C 64/336

(54) **TOOL FOR PROCESSING NONPOLYMERIC MATERIALS AND 3D PRINTING ENCAPSULATION METHOD**

(30) Priority: 13.11.2023 PT 2023119045
(71) Applicant: Universidade de Aveiro, 3810-193 Aveiro (PT)
(72) Inventor: MOREIRA, Miguel, 3810-193 Aveiro (PT); SILVA, Tiago, 3810-193 Aveiro (PT); SILVA, Fernando, 3810-193 Aveiro (PT); AMARAL, Cláudia, 3810-193 Aveiro (PT); VICENTE, Romeu, 3810-193 Aveiro (PT); OLIVEIRA, João, 3810-193 Aveiro (PT)
(74) Representative: Couto, Cláudia

(57) **Abstract**

The present invention relates to a tool and method of encapsulating a phase change material (PCM) by 3D printing. The PCM encapsulation system comprises non-polymeric material processing tools (106, 107) incorporated into a 3D printer system (101) with tool change capability and the PCM encapsulation method using these same tools, intermittently with other polymer processing tools (102, 103), responsible for the deposition of polymer A (401) and polymer B (402), which move in a system of horizontal axes (105), coupled to a tool holder (104), to deposit the material and fill it on an adjustable temperature basis (109), constituting a multi-material design (108) with polymeric shell and PCM interior. This invention makes it possible to create complex designs and is a solution to the current problems of flexible production of phase change materials (PCM) macrocapsules.

## Description

### Technical Field

The present invention relates to a tool for processing non-polymeric materials and a method that, through the base additive manufacturing/3D printing FDM - Fused Deposition Modelling - technology, and the referred tool, incorporates non-polymeric materials such as phase change materials (PCM) into polymeric capsules in order to create a composite design of polymers, PCM and other materials.

### Background Art

US20220243998A1 discloses the use of a 3D printing system capable of depositing polymeric filament containing a PCM core and the creation of designs conceived with the simultaneous extrusion, through a common nozzle, of two distinct and differentiated materials (polymer and PCM), comprising a polymeric shell design and PCM core.

US9168685B2 discloses the use of a system that couples the functionality of two tools into a single system (where both tools are connected and the movement of one requires the movement of the other), capable of extruding two polymeric materials independently, making it possible to create designs with up to two different polymers depending on input from the user of the 3D printing equipment.

US8926484B1 discloses the use of a 3D printing system that contains multiple independent polymeric material processing tools, which are stationary in a docking station. According to the user's needs and using the program developed to control the 3D printing system through software, commonly known as slicer, a tool holder contained in a system of movable axes meets the desired stationary tool. In this way, the tool is attached to the tool holder and can therefore be transported by the 3D printer's system axis/movement system, in order to deposit the material processed by that tool in the desired location, enabling the creation of a design with multiple polymeric materials.

None of the previous disclosures present an independent and differentiated tool optimized for processing non-polymeric materials (developed exclusively to process a family of non-polymeric materials, such as PCM), nor do they resort to the use of a 3D printing method that uses one or multiple of the previously mentioned non-polymeric material processing tools, in combination with other conventional polymer processing tools, intermittently and sequentially throughout the creation of the entire desired design (depositing the polymeric shell, followed by filling the interior of the shell with the non- polymeric material, layer by layer - according to the FDM (Fused Deposition Modelling) manufacturing process). In this way, it is possible to create multi-material designs (with a total number of materials equal to or greater than two) with a polymeric shell and a core with non-polymeric material, with an unlimited number of material combinations, depending on the number of tools available in the 3D printing system.

The technical problem that this invention solves is (1) eliminating the risk of material contamination that makes the production of functional designs unfeasible, increasing process reliability, (2) reducing the complexity of using a single multi-function tool, while increasing the versatility of the 3D printing system and, consequently, the manufacturing process and (3) enabling the combination of certain materials that would be impossible to combine in a multipurpose tool due to incompatibility of the processing conditions.

More specifically, this invention allows for the efficient filling of polymeric shell designs with non-polymeric materials, such as PCM, that will have to sustain phase changes (solid, liquid or gas) within a closed, watertight design.

Furthermore, this invention allows the creation of designs with a polymeric shell and a non-polymeric core (namely capsules filled with PCM) that are more complex (both geometrically and in terms of the combination of multiple materials, whether polymeric or non-polymeric), enabling the use of suitable support materials to facilitate post-processing of designed designs.

At the same time, it is mainly distinguished from US20220243998A1 in that the use of just one multifunctional tool involves the creation of a more complex tool. The different materials to be processed have different requirements, whether in terms of heating, cooling, transport method to the extrusion tool or method. When responding to all these requirements simultaneously, in the same tool, incompatibilities arise that make the use of certain combinations of materials unfeasible and require very complex and expensive systems. For example, a polymer needs to be processed at 250°C, but a non-polymeric material has a maximum operating temperature of 100°C, the temperature at which it degrades and its properties change.

Furthermore, more complex mechanical systems increase the risk of equipment failure and greater need for maintenance. The use of multiple different tools makes the presented process more versatile in terms of possible combinations of materials in the same design in a more reliable and viable way. Due to the existence of independent and differentiated tools (each tool is responsible for processing only one material or family of materials), preventing contamination of materials and avoiding clogging caused by phase changes of the PCM, making the equipment and method of creation of PCM macrocapsules (among other applications) more reliable and repeatable. This prevention is extremely important considering that contamination of materials is a sufficient cause to make the produced design entirety unfeasible, as it is responsible for the occurrence of leaks and leakage of the capsule contents. This leakage occurs due to contamination of the polymeric layers by PCM, which makes it impossible for the next polymeric layer to adhere to the previous polymeric layer, making it impossible to create a watertight design or even a catastrophic failure during its production (a failure that requires the immediate stop of design production, as the defects generated can cause clogging, leading to the deposition of materials in the wrong places, which can cause impacts in the 3D printer system tool holder or processing tools, damaging the equipment).

These facts are disclosed in order to illustrate the technical problem addressed by the present disclosure.

### Summary of Invention

The incorporation of non-polymeric materials, such as PCM, into capsules is a challenge in the scientific, academic and industrial community. In addition to the restrictions on the shape and geometry to be used, there are still limitations regarding thermal and mechanical properties, production rate, series production and automation for the incorporation of these materials. These problems and limitations make it difficult for these materials to enter the market in areas where their potential is proven and validated, namely in increasing the efficiency of thermal systems and consequently reducing energy consumption. This invention aims to contribute to solve these problems, presenting a solution that allows incorporating PCM in a simple, automatic, reliable and flexible way.

The objective of the present invention is to use multiple specialized tools (which process only a specific type of material - e.g. polymeric materials or non-polymeric materials) intermittently, capable of processing polymers and/or PCM and depositing these same materials in a surface, in order to form a design with a polymeric shell and a PCM core. In this way, macroencapsulation of PCM in a polymeric design is done.

The present invention is useful for the reliable, repeatable and flexible production of macrocapsules with PCM and with less geometrical limitations. Furthermore, it allows the combination of multiple materials (more than two), avoiding material contamination and eliminating limitations regarding the processing compatibility of the multiple materials involved.

The present invention discloses a tool for processing non-polymeric materials by 3D printing, characterized in that it comprises: - a non-polymeric material deposit (302) that stores the material to be processed,- a base and pumping system of the non-polymeric material container (310) where the non-polymeric material container is fitted, where a pumping system is incorporated, - tubing (308) equipped with a thermal sleeve (307) and thermal insulation (306) through which the non-polymeric material will drain/flow, - a tool head (305) composed of fittings complementary to those of the tool holder (104) and equipped with resistors and thermocouples (304) and a valve (303), - an adjustable temperature base (109) with rails that drain excess material into a waste collector (110).

In one embodiment of the invention, the flow rate in the tubing (308) is 0.01 mLs-1 to 100 mLs-1.

In another embodiment of the invention, the deposit of non-polymeric material (302) is hermetically closed and isolated.

In another embodiment of the invention, the deposit of non-polymeric material (302) comprises resistors and thermocouples.

In another embodiment of the invention, the deposit of non-polymeric material (302) comprises level and load sensors (309).

In another embodiment of the invention, the non-polymeric material deposit (302) comprises a quick-fit valve (311).

In another embodiment of the invention, the deposit of non-polymeric material (302) comprises an electronic connector of the PCM deposit (313).

In another embodiment of the invention, the base comprises resistors and thermocouples (301).

In another embodiment of the invention, the base comprises a plug valve, corresponding to the quick plug valve of the container (311).

In another embodiment of the invention, the base comprises an electronic connector, corresponding to the electronic connector of the PCM deposit (313).

In another embodiment of the invention, the tubing (308) comprises a tube resistant to corrosion and high temperature, preferably silicone or PTFE, through which the material will flow.

In another embodiment of the invention, the tubing comprises a thermal sleeve (307) that surrounds the tube that is directly in contact with the processed material, equipped with resistors and thermocouples, allowing control of the temperature and physical state of the material flowing through the tubing.

In another embodiment of the invention, the tubing comprises a thermal insulation layer (306) surrounding all other components of the tubing (308) and the thermal sleeve (307).

In another embodiment of the invention, the tool head (305) comprises fittings for coupling the tubing (308), the thermal insulation (306) and the thermal sleeve (307), a valve (303) for extrusion of the processed material, resistors and thermocouples (304) and the coupling mechanism with the tool holder (104) that allows the incorporation of this tool in a system of horizontal axes (105) present on the 3D printer with tool change capability.

The current invention also discloses a method of encapsulating non-polymeric materials by 3D printing according to the previous claims, characterized in that it comprises the following steps: 1) operationalize a polymeric materials processing tool; 2) deposit polymeric material that will constitute the layers corresponding to the floor (bottom layer) of the capsule that constitutes the desired design; 3) deposit polymeric material that will constitute the number of closed perimeters required, depending on the program developed by the CNC code programmer corresponding to the first layer of the capsule wall of the desired design; 4) dock the polymer materials processing tool in use; 5) operationalize a tool for processing non-polymeric materials; 6) deposit the non-polymeric material in order to fill the volume corresponding to the closed perimeter carried out in step 3, equivalent to the design core; 7) dock the non-polymeric materials processing tool in use; 8) operationalize a polymeric materials processing tool; 9) repeat steps 3 to 8 until the equivalent of the capsule walls are finished; 10) deposit polymeric material that will constitute the layers corresponding to the roof (top surface) of the capsule, thus closing and sealing it.

In one embodiment of the method, the operationalization of the non-polymeric materials processing tool is used intermittently with other polymer processing tools (102, 103).

### General description of the invention

The present invention concerns an additive manufacturing technology (tool and method), combining at least one tool that allows phase change materials (PCM) to be incorporated intermittently or continuously, in parallel with the production of the polymeric capsule, which guarantees flexibility in the production of hermetic and watertight design (in the shape, geometry and materials of the capsule) so that it can contain non-polymeric materials inside without loss.

This development is possible through the use of a 3D printer that has a tool change system, in which each tool is responsible for processing a single individual material, whether polymeric or PCM. For this method to work correctly, it is necessary that at least one tool for processing polymeric materials (102,103) and at least one tool for processing non-polymeric materials (106,107) are available on the 3D printer (101). For explanatory purposes, and to better demonstrate the versatility of the method, this document demonstrates a 3D printer configuration with two tools of each type of the previously mentioned tools.

In this way, it is possible to use different materials and different combinations of these same materials.

The additive manufacturing method to incorporate PCM into a polymeric design is characterized by the use of a tool exchange system in which there are several tools available with variable properties, which allows the use of multiple polymeric and non-polymeric materials (such as PCM) intermittently, in a single design.

The tool is capable of processing, transporting and depositing PCM and other non-polymeric materials, in a certain physical state in order to fill the polymeric capsule, intermittently with the deposition of polymer by other tools, in order to create the final design of a macrocapsule with PCM.

Some of the advantages of the present invention are: - ensure repeatable and reliable means to produce solutions with embedded PCM; - greater freedom of shape, geometry and composition of solutions, due to the possibility of combining different materials in the same produced design and with fewer geometric limitations; - allow the processing and interconnection of a wider range of materials; - optimization of the thermal, mechanical and geometric properties of the produced product; - creation and application of solutions that incorporate PCM in areas that were previously difficult to access or apply; - enabling the commercialization and increasing the availability of PCM solutions; - provision of PCM solutions that will contribute to research on this topic; - provision of PCM solutions that will allow the development of new products and solutions for society; - reduction of contamination of the materials used, increasing the reliability of the designs produced; - reduce the complexity, cost and need for maintenance when using complex multifunctional tools.

The present invention relates to a PCM encapsulation system comprising:
- a container of non-polymeric material (302), equipped with resistors and thermocouples (301) to store and regulate the temperature of the non-polymeric material. This container is also equipped with a level and load sensor (309) responsible for measuring the level/weight of the amount of material remaining inside this container. Furthermore, it contains the electronic connector of the PCM container (313) which allows the connection of information and electricity with the base and pumping system (310), responsible for imposing movement on the material contained in the container and a quick-fitting valve (311) which makes the connection with the tubing (308), capable of housing a flow rate of 0.01mLs-1 to 100mLs-1.
- a tool head (305), responsible for coupling the tool to the tool holder (104) on the 3D printer system (101) and allowing this 3D printer system to use it as one of several tools available to create a design. Furthermore, the tool head houses other components, namely thermocouples and resistors (304) for controlling the temperature of the material in question and a valve (303) for more precise control of the deposition of the material by controlling the flow rate with which the material is deposited.
- a tubing (308), capable of controlling the temperature of the non-polymeric material that flows through it and transports it to other components of the tool. This tubing is covered by a thermal sleeve (307), as well as a thermal insulation layer (306).
- a base with a pumping system (310), responsible for imposing a flow of the non-polymeric material from the deposit to the tool head or vice versa and for serving as a base for the deposit of non-polymeric material (302), which contains the corresponding electronic PCM container base connector (312).
- an adjustable temperature base (109), where the design is made, which contains rails along its perimeter, so that the material that, for some reason, spills/overflows/falls from the design is drained to a waste collector (110), also contained in this base.

In one embodiment, the system also comprises electronic connectors for transmitting electricity and exchanging information between the various electronic components (so that it is possible to control these components) and valves to connect and maintain the circuit closed and watertight, which allow the ergonomic and quick fitting of the various components, facilitating their handling. Furthermore, the container can contain load and level sensors whose collection and processing of the data provided by them allows the calculation of the level and quantity of material still present in the container in real time.

The present invention also refers to the method for encapsulating PCM, which comprises the following steps, based on the FDM process, which manufactures designs by depositing material layer by layer: 1. operationalize a polymeric materials processing tool; 2. deposit polymeric material that will constitute the layers corresponding to the floor/bottom layers of the capsule/shell; 3. deposit polymeric material that will constitute the number of closed perimeters necessary (depending on the operator/programmer's wishes) corresponding to the first layer of the capsule/shell wall; 4. dock the polymer materials processing tool in use; 5. operationalize a tool for processing non-polymeric materials; 6. deposit the non-polymeric material in order to fill the volume corresponding to the closed perimeter carried out in step 3, equivalent to the design core; 7. dock the non-polymeric materials processing tool in use; 8. operationalize a polymeric materials processing tool; 9. repeat steps 3 to 8 until the equivalent of the capsule walls are finished; 10. deposit polymeric material that will constitute the layers corresponding to the roof/top layers of the capsule/shell, thus closing/sealing it.

### Brief Description of Drawings

For an easier understanding of the invention, the following figures represent preferred embodiments of the invention which, however, are not intended to limit the object of the present invention.
[Fig. 1] represents an isometric view of the 3D printer with tool change capability where the invention (non-polymeric materials processing tool) is attached to the tool holder, ready to be used to complete the core of the design, in the preferred embodiment.
[Fig.2] represents the sectional view of the non-polymeric materials/PCM processing tool described in the document in the preferred embodiment.
[Fig.3] represents the front view of the described system, in the preferred embodiment.
[Fig.4] represents a cross-sectional view of an example PCM-filled macrocapsule design, previously shown in Figure 1 and 3, produced by the 3D printer shown in Figure 1 and 3 using the tool and method described in this document and represented in detail in figure 2.

### Description of Embodiments

This invention is based on the application of additive manufacturing technology to the encapsulation of non-polymeric materials.

This invention consists of a tool for processing non-polymeric materials and a method that uses this and other tools to macroencapsulate PCM when incorporated into a 3D printer (101). For this method, it is a requirement that at least one processing tool for polymeric materials (102,103) and at least one processing tool for non-polymeric materials (106,107) are available on the 3D printer (101). For explanatory purposes, and to better demonstrate the versatility of the method, this document demonstrates a configuration of the 3D printer with two tools of each type of the previously mentioned tools, however this document should not limit the described method, as it can be used as a greater number of tools being used.

Likewise, an explanatory design (108) composed of two polymeric materials, the first corresponding to the lower polymeric shell (202) and the second corresponding to the upper polymeric shell (203), as well as two non-polymeric materials, the first corresponding to the lower non-polymeric material core (201) and the second corresponding to the upper non-polymeric material core (204), however this document should not limit the design (108) described, as it may use a greater number of polymeric materials and non-polymeric cores being used, depending on the number of tools available for use in the 3D printer.

The method presented uses the intermittent use of different polymeric materials processing tools (102,103) and/or non-polymeric materials processing tools (106,107) to constitute a design (108) with a lower polymeric shell (202) and an upper polymeric shell (203), lower non-polymeric material core (201) and upper non-polymeric material core (204) on a temperature-adjustable base (109), whether or not using a closed chamber with active or passive temperature regulation.

The adjustable temperature base (109) is a flat surface with slots/rails on its edges, forming a border along the perimeter of the base. Its temperature is controllable within a range of 20°C to 250°C. The function of this slot is to form a rail to allow unwanted waste (resulting from tool purging or unwanted leaks) to flow to a waste collector (110) that collects all excess/unwanted material. The waste collector (110) also serves to purge the material accumulated in the nozzle or valve (303) for extrusion of the material in the tool head (305) that is being processed, so that there is no contamination of the different materials used.

To apply the presented additive manufacturing method, it is necessary to use at least one independent tool responsible for storing, transporting and processing the non-polymeric material, called the non-polymeric materials processing tool (106,107), responsible for constituting the core of the design (108) to be produced and at least one polymeric materials processing tool (102,103) that would be responsible for the same functions as the previous one, but for polymeric material, responsible for constituting the polymeric shell of the design (108).

The system allows the use of an indefinite number of tools and allows the combination of their intermittent use to create multi-material designs (108), with combinations of multiple polymeric materials and non-polymeric materials, with complex geometry and variable printing parameters in order to optimize the produced design, depending on the requirements of the intended application. The greater the number of tools available, the more complex the designs can be, in terms of material combinations, whether polymeric or non-polymeric.

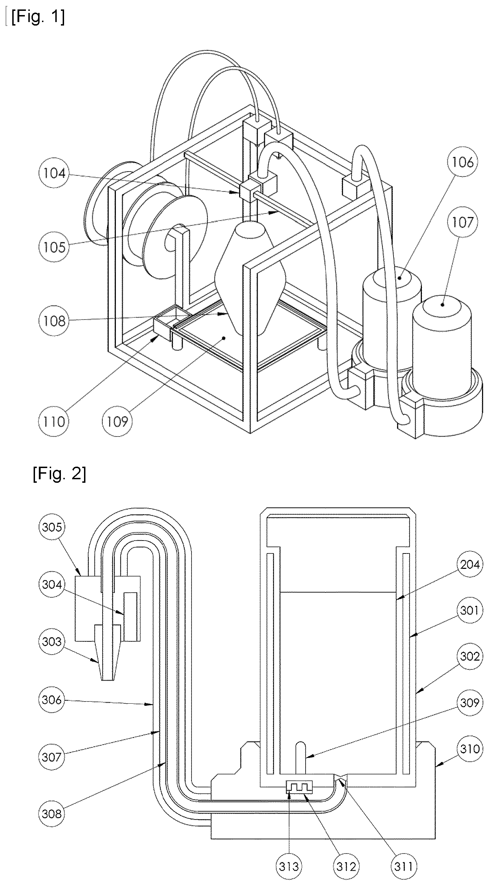

The processing tool for non-polymeric materials (106,107) shown in section view in figure 2 is also inventive in nature and consists of an integrated system with the ability to change the physical state of a PCM through temperature control (heating/ cooling) of the non-polymeric material in question, with thermal resistances, up to its phase change temperature), in order to transport it, preferably but not exclusively in the liquid state, through a tubing (308), for example, made of PTFE or silicone, and with the aid of a pumping system, corresponding to the base and pumping system of the non-polymeric materials deposit (310) (regardless of whether its operation is through gears, spindles or pump type, such as a peristaltic or diaphragm pump), to deposit/incorporate it into the defined capsule location. This tool will be one of multiple tools available for the 3D printing system to use, depending on the method and parameters defined by the user.

The tool consists of 4 main subsystems:
1) A deposit of non-polymeric material (302). This deposit serves not only as storage, but also as a heating agent to change the phase of the PCM (e.g. from solid to liquid state). This deposit consists of a thermally insulated container, hermetically closed, and a heating system composed of resistors and thermocouples (301), in order to control the internal temperature and evaluate the physical state of the PCM. It is also equipped with a level and load sensor (309), so that it is possible to calculate and provide information in real time about the quantity and level of PCM/non-polymeric material that still exists in the container. There is also a quick-fit valve (311), in order to guarantee tightness and facilitate the connection of subsystem 1 to subsystem 3 in an easy, quick and ergonomic way;
2) A subsystem for transporting the non-polymeric material, previously cast in subsystem 1. This subsystem is composed of tubing (308), made of anticorrosive material (such as, but not restricted to, materials such as PTFE or Silicone) with a thermal sleeve (307), composed of thermal resistances and thermocouples and thermal insulation (306), so that the PCM temperature is controlled during transport. This control is important to prevent the non-polymeric material from cooling and returning to a solid state, causing blockages in the tubing. All of these constituent elements of subsystem 2 are flexible, with the tubing being mobile and agile;
3) A third subsystem that performs the functions of pumping/forcing the movement of the PCM, carried out by a pumping system with any pump (for example, a peristaltic pump, a spindle or gears), also provided with resistances and thermocouples (301) built-in to regulate the temperature of the fluid in question, to avoid unwanted solidification within this component and leading to clogging. In this component there is an electronic connector for the PCM deposit (313), which connects with the electronic connector for the base of the non-polymeric materials deposit (312), corresponding to the PCM deposit, being responsible for power supply to the deposit and all its subcomponents, in addition to communicating the information collected by the sensors of component/subsystem 1, allowing temperature control and calculation of the amount of material remaining within the deposit. The complement of the quick-fitting valve corresponding to the one present in subsystem 1 is also present. In this way, the electrical connector and the quick-fitting valve allow changing the container in an ergonomic, quick and easy way, allowing efficient reloading of the non-polymeric material/PCM or changing to a completely different material, without the need to change/handle subsystem 2, composed of components called thermal insulation (306), thermal sleeve (307) and tubing (308) and subsystem 3, corresponding to the Base and pumping system for the non-polymeric materials deposit (310). The pump present in this pumping system (310) forces the material to pass through subsystem 2 or directly to subsystem 4);
4) A fourth subsystem composed of the tool head (305), which is a connecting structure for other components and is responsible for coupling all tools to the tool holder (104) present in the system horizontal axes (105) of movement of the 3D printer system (101). It consists of a valve (303) to control the extrusion of the material for the design (108) to be created. The tool head (305) also incorporates resistors and thermocouples (304) to control the temperature in this region, a fitting system with 3 keys for the correct alignment of the tool, so that it can be coupled with the tool holder (104) present in a system of horizontal axes (105) for fitting to change the 3D printer tool (101). It also has a fitting for coupling between subsystem 2, through which the non-polymeric material flows.

The method presented allows the use of 1 (one) or more tools for processing non-polymeric materials, making it possible to use multiple different non-polymeric materials in the same design.

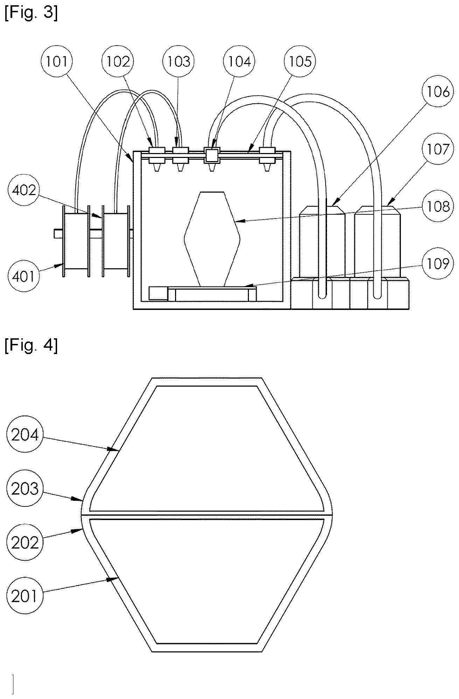

Likewise, the system allows the use of 1 (one) or more tools for processing polymeric materials, allowing multiple different polymers to be used in the same design, and thus combining multiple non-polymeric materials with multiple polymers in the same design, as is demonstrated by figure 3, where the design (108) presents a lower polymeric shell (202) of a polymer A (401) - such as PLA, PETG, PC, among others mentioned later - with a core of lower non-polymeric material (201) and an upper polymeric shell (203) of another polymer B (402) different from the first and a core of upper non-polymeric material (204) of another non-polymeric material B different from the first, the design (108) being an example consisting of 4 (four) different materials; This tool can operate intermittently with one or several tools available on the 3D printer system (101), which allows the different materials to be deposited in the correct location, depending on the desired design (108); The non-polymeric materials processing tool (106,107) shown in section in Figure 4, which deposits the non-polymeric material will be used intermittently with other available tools to make the filler and polymeric capsule, corresponding to the lower polymeric shell (202) and polymeric shell top (203) in figure 4, produced by the other polymeric materials processing tools (102,103) available. The use of high extrusion temperatures (between 50°C and 500°C) and a closed chamber to control the temperature and environmental conditions of this space (e.g. humidity), allows the processing of a wide variety of materials. As a consequence of this flexibility and ergonomics, the macrocapsule with non-polymeric material can be created with greater strength, lower weight, greater resistance to corrosion and fire, solving a wide range of problems of using certain phase change materials.

The use of multiple tools will allow designs with great freedom and possibility of optimization, using the combination of multiple polymers and/or PCMs, enabling the creation of macrocapsules of complex multi-material designs. In this way, the technology presented is inventive in relation to the state of the art, being more versatile, more reliable and responding to the problems presented. Some of the polymers, polymer families, derivatives and associated composites (such as carbon fiber and glass fibber infusions, for example) such as polyamide (PA), polysulfine (PSU), polyethylene sulphide (PPS), polypropylene (PP), Polyethylene terephthalate glycol (PETG), polycarbonate (PC), Polycyclohexylenedimethylene terephthalate (PCTG), Polyaryletherketone (PAEK), Polyetherimide (PEI), Polyvinylidene fluoride (PVDF) and High Impact Polystyrene (HIPS) can be used together with multiple phase change materials in order to create the desired design. Some of these materials have relevant characteristics to produce macrocapsules, such as high mechanical strength, corrosion resistance and flame-retardant properties.

The method presented is comprised by, initially, a CNC code is generated by any software that allows the control of 3D printers (commonly called slicer) where the operator defines several parameters necessary to produce the desired design, such as defining the function of the tools depending on the different types of capsule surroundings that constitute the desired design (floor, walls, roof, support, filling, among others) and material processing parameters (extrusion temperatures, speed, cooling, between others).

More complex designs may contain geometries where there are several envelopes that can be considered floor, ceiling/roof, support, wall and filling, depending on the slicer used to program the behaviour of the 3D printer system and the terminology that this software uses. In this way, different members of the surrounding can be processed by different materials, giving rise to more complex designs, composed by multiple polymers and PCM.

With this in mind, the method is characterized by using the polymeric materials processing tool to deposit a solid base of material on the surface where the design is produced, layer by layer, followed by closed perimeters on top of this solid layer, leaving a void in the area delimited by these perimeters, interspersed with the filling of these perimeters with non-polymeric material, cyclically in order to constitute the desired design, processed by the non-polymeric materials processing tool and finishing the design with one or several solid layers of polymeric material, thus producing the roof of the shell envelope of the desired design, making the capsule closed and watertight.

This method allows that, in the same design, there may be several hollow areas to be filled by the same non-polymeric materials processing tool (106,107) or by different non-polymeric materials processing tools, allowing the voids to be filled in the design with multiple different non-polymeric materials.

This method allows the combination of the use of different polymer material processing tools to produce complex designs with several polymers integrated into one design.

### Industrial Applicability

There are several areas of application for this processing tool and encapsulation method, for creating capsules that contain non-polymeric materials in their core. One of the most relevant non-polymeric materials to be processed by this invention are phase change materials, hereinafter defined as PCM. This processing tool and encapsulation method allow the production of encapsulated PCM, with great applicability in improving the efficiency of thermal systems, such as buildings. Some of the applications that can be mentioned are the different thermal systems and solutions applied in the residential, industrial, and leisure sectors; the air conditioning of buildings, through passive, active and/or mixed solutions; the temperature thermoregulation of electronic components and/or other systems that require temperature control; in the health sector, in the transport of medicines or other goods that require temperature control; and in the food area, in the transport or storage of food at certain temperatures.

Given the previously mentioned utility of PCMs, the proposed method and system will have an impact on all mentioned industries and applications, as its main objective is to produce macrocapsules repeatably and reliably, currently not available on the market in a flexible way.

One of the advantages and a strong point of this invention is its applicability in any type of industry. It can be applied from a perspective of development, production and commercialization of industrial equipment or from a perspective of being used for the production of macrocapsules with PCM. This invention is transversal to all industries that involve the production and/or use of encapsulated phase change material, largely including applications that require air conditioning/temperature control. The use of macroencapsulated PCM in the construction sector to increase the energy efficiency of buildings has been increasingly common in the literature, and on average the gains presented are greater than 20%.

However, the PCM systems tested are developed in a rudimentary way, with little repeatability. There are still no systems or methods to solve these problems, hindering and limiting the entry and commercialization of PCM solutions on the market.

The proposed invention will provide a reliable production method for encapsulating PCM, which in turn will enable and increase the use of this type of material and facilitate its adoption in the market. Furthermore, this method and tool allow flexible production, with a high degree of customization and with very few geometry limitations for the desired design, allowing the production and development of macroencapsulated PCM optimized for any use case.

This invention (processing tool and encapsulation method) becomes especially attractive as it provides greater viability in the production of macroencapsulated PCM. One of the major challenges of producing and filling these capsules using 3D printing is the contamination of the polymeric shell layers with PCM. This prevents the next polymeric shell layer from adhering to the previous one, resulting in serious defects in the capsule that completely invalidate its functioning, due to the leakage of the PCM from the capsule core to the outside.

Experimental results carried out in the development of this invention demonstrated that in the production of multiple polymeric capsules with PCM filling, they all suffered from PCM contamination between polymer layers, which led to 80% of these capsules suffering layer detachment phenomena during their production, which led to the consequent failure to complete production of the capsule. The remaining capsules, having been completely produced, when submitted to thermal cycling leaked their inner PCM content, given the presence of openings along the polymer layers due to PCM contamination which, due to phase change phenomena, gave way.

The use of the presented processing tool (this being a specialized tool, which processes only one non-polymeric material), together with other specialized polymer processing tools, allows for a separation of materials, with only one processing tool in motion each time by the 3D printer system, eliminating the risk that the movement of the non-polymeric materials processing tool leaks its residual contents onto the polymeric shell with PCM, leading to contamination of the shell layer being printed and leading to complete production failure of the design, which is highly likely to happen in inventions such as those presented above, as in the case of US20220243998A1 patent, because as a tool is used that combines the processing of polymeric and non-polymeric material simultaneously, there is a constant risk of leaking PCM into a polymeric surface that is supposed to form bonds with other polymeric surfaces. Furthermore, the US20220243998A1 patent also has the problem that, due to PCM and polymer being extruded through the same nozzle, there is immediate contamination of the polymer by excess PCM accumulated in the nozzle, immediately after its extrusion, once again leading to production failure of the desired design.

In one embodiment, the method of encapsulating non-polymeric materials by 3D printing comprises the following steps: 1) define, in a generic CNC code generator program for 3D printers, which are the processing tools for polymeric and non-polymeric materials; 2) assign the respective tools to the various elements of the design to be constituted, with the polymeric materials processing tools being responsible for producing elements such as the walls, floor, roof and supports of the desired design and the non-polymeric materials processing tools will be responsible for producing elements such as filling the desired design; 3) generate the CNC code that operationalizes the various tools available in the 3D printer, which controls the various axes of movement that will move the tools and controls the deposition of the materials to be processed by these tools to generate the design; 4) send the generated CNC program to the 3D printer and begin the manufacturing process.

In one embodiment, the method for encapsulating non-polymeric materials described above comprises the following steps: 1. operationalize a polymeric materials processing tool; 2. deposit polymeric material that will constitute the layers corresponding to the "floor" of the capsule/shell; 3. deposit polymeric material that will constitute the number of closed perimeters necessary (depending on the operator/programmer's wishes) corresponding to the first layer of the capsule/shell wall; 4. dock the polymer materials processing tool in use; 5. operationalize a tool for processing non-polymeric materials; 6. deposit the non-polymeric material in order to fill the volume corresponding to the closed perimeter carried out in step 3, equivalent to the design core; 7. dock the non-polymeric materials processing tool in use; 8. operationalize a polymeric materials processing tool; 9. repeat steps 3 to 8 until the equivalent of the capsule walls are finished; 10. deposit polymeric material that will constitute the layers corresponding to the roof of the capsule/shell, thus closing/sealing it.

The intermittent use of the presented non-polymeric material processing tool, interspersed with other identical tools or polymeric material processing tools, constitutes the desired design, layer by layer, according to the program developed by the machine operator.

The subject matter described above is provided as an embodiment of the present invention and should not be interpreted to limit it. Terminology employed for the purpose of describing specific embodiments in accordance with the present invention should not be construed to limit the invention.

It will be understood that the term "comprises", when used in this specification, specifies the presence of related characteristics, elements, components, steps and operations, but does not exclude the possibility that other characteristics, elements, components, steps and operations are also contemplated.

The invention should not be seen in any way restricted to the described embodiments and a person with ordinary skill in the art will foresee many possibilities for modifications thereof.

The embodiments described above are combinable.

The following claims further establish particular embodiments of the invention.

### Reference Signs List

101 - 3D Printer system
102 - Polymeric materials processing tool A
103 - Polymeric materials processing tool B
104 - Tool holder
105 - Horizontal axis system
106 - Non-polymeric materials processing tool A
107 - Non-polymeric materials processing tool B
108 - Design
109 - Adjustable temperature base
110 - Waste collector
201 - Lower non-polymeric material core
202 - Lower polymeric shell
203 - Superior polymeric shell
204 - Superior non-polymeric material core
301 - Resistors and thermocouples
302 - Deposit of non-polymeric material
303 - Valve
304 - Resistors and thermocouples
305 - Tool head
306 - Thermal insulation
307 - Thermal sleeve
308 - Tubing
309 - Level and load sensor
310 - PCM container base and pumping system
311 - Quick-fit valve
312 - Electronic PCM container base connector
313 - Electronic PCM container connector
401 - Polymer A
402 - Polymer B

## Claims

1. Tool for processing non-polymeric materials by 3D printing, **characterized in that** it comprises: - a non-polymeric material deposit (302) that stores the material to be processed,- a base and pumping system of the non-polymeric material container (310) where the non-polymeric material container is fitted, where a pumping system is incorporated, - tubing (308) equipped with a thermal sleeve (307) and thermal insulation (306) through which the non-polymeric material will drain/flow, - a tool head (305) composed of fittings complementary to those of the tool holder (104) and equipped with resistors and thermocouples (304) and a valve (303), - an adjustable temperature base (109) with rails that drain excess material into a waste collector (110).

2. Tool for processing non-polymeric materials by 3D printing, according to the previous claim, **characterized in that** the flow rate in the tubing (308) is 0.01 mLs-1 to 100 mLs-1.

3. Tool for processing non-polymeric materials by 3D printing, according to the previous claim, **characterized in that** the deposit of non-polymeric material (302) is hermetically closed and isolated.

4. Tool for processing non-polymeric materials by 3D printing, according to the previous claims, **characterized in that** the deposit of non-polymeric material (302) comprises resistors and thermocouples.

5. Tool for processing non-polymeric materials by 3D printing, according to the previous claims, **characterized in that** the deposit of non-polymeric material (302) comprises level and load sensors (309).

6. Tool for processing non-polymeric materials by 3D printing, according to the previous claims, **characterized in that** the non-polymeric material deposit (302) comprises a quick-fit valve (311).

7. Tool for processing non-polymeric materials by 3D printing, according to the previous claims, **characterized in that** the deposit of non-polymeric material (302) comprises an electronic connector of the PCM deposit (313).

8. Tool for processing non-polymeric materials by 3D printing, according to the previous claims, **characterized in that** the base comprises resistors and thermocouples (301).

9. Tool for processing non-polymeric materials by 3D printing, according to the previous claims, **characterized in that** the base comprises a plug valve, corresponding to the quick plug valve of the container (311).

10. Tool for processing non-polymeric materials by 3D printing, according to the previous claims, **characterized in that** the base comprises an electronic connector, corresponding to the electronic connector of the PCM deposit (313).

11. Tool for processing non-polymeric materials by 3D printing, according to the previous claims, **characterized in that** the tubing (308) comprises a tube resistant to corrosion and high temperature, preferably silicone or PTFE, through which the material will flow.

12. Tool for processing non-polymeric materials by 3D printing, according to the previous claims, **characterized in that** the tubing comprises a thermal sleeve (307) that surrounds the tube that is directly in contact with the processed material, equipped with resistors and thermocouples, allowing control of the temperature and physical state of the material flowing through the tubing.

13. Tool for processing non-polymeric materials by 3D printing, according to the previous claims, **characterized in that** the tubing comprises a thermal insulation layer (306) surrounding all other components of the tubing (308) and the thermal sleeve (307).

14. Tool for processing non-polymeric materials by 3D printing, according to the previous claims, **characterized in that** the tool head (305) comprises fittings for coupling the tubing (308), the thermal insulation (306) and the thermal sleeve (307), a valve (303) for extrusion of the processed material, resistors and thermocouples (304) and the coupling mechanism with the tool holder (104) that allows the incorporation of this tool in a system of horizontal axes (105) present on the 3D printer with tool change capability.

15. Method of encapsulating non-polymeric materials by 3D printing according to the previous claims, **characterized in that** it comprises the following steps: 1) operationalize a polymeric materials processing tool; 2) deposit polymeric material that will constitute the layers corresponding to the floor of the capsule that constitutes the desired design; 3) deposit polymeric material that will constitute the number of closed perimeters required, depending on the program developed by the CNC code programmer corresponding to the first layer of the capsule wall of the desired design; 4) dock the polymer materials processing tool in use; 5) operationalize a tool for processing non-polymeric materials; 6) deposit the non-polymeric material in order to fill the volume corresponding to the closed perimeter carried out in step 3, equivalent to the design core; 7) dock the non-polymeric materials processing tool in use; 8) operationalize a polymeric materials processing tool; 9) repeat steps 3 to 8 until the equivalent of the capsule walls are finished; 10) deposit polymeric material that will constitute the layers corresponding to the roof of the capsule, thus closing and sealing it.

16. Method according to the previous claim **characterized in that** the operationalization of the non-polymeric materials processing tool is used intermittently with other polymer processing tools (102, 103). 1
